# EUROPEAN PATENT SPECIFICATION

(11) **EP 2 571 308 B1**
(45) Date of publication and mention of the grant of the patent: **02.08.2017**
(21) Application number: 11780199.3
(22) Date of filing: 11.05.2011
(51) Int. Cl.: H04W 36/00, H04W 36/04

(54) **METHOD AND TERMINAL FOR SENDING MEASUREMENT REPORT**
VERFAHREN UND TERMINAL ZUM SENDEN VON MESSBERICHTEN
PROCÉDÉ ET TERMINAL D'ENVOI DE RAPPORT DE MESURE

(30) Priority: 11.05.2010 CN 201010178369
(43) Date of publication of application: 20.03.2013
(73) Proprietor: Huawei Technologies Co., Ltd., Longgang District Shenzhen, Guangdong 518129 (CN)
(72) Inventor: WANG, Jiyong, Shenzhen Guangdong 518129 (CN); FANG, Ming, Shenzhen Guangdong 518129 (CN)
(74) Representative: Isarpatent
(86) International application number: PCT/CN2011/073915
(87) International publication number: WO 2011/140978

(56) References cited:
- CN-A- 101 500 244
- CN-A- 101 553 020
- CN-A- 101 616 424
- HUAWEI TECHNOLOGIES CO ET AL: "Measurement Report for CSG cells", 3GPP DRAFT; GP-100297_CR 44.060-1336 REV 2 MEASUREMENT REPORT FOR CSG CELLS (REL-9), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Berlin, Germany; 20100305, 25 February 2010 (2010-02-25), XP050594685, [retrieved on 2010-02-25]
- HUAWEI TECHNOLOGIES CO ET AL: "Measurement Report for CSG cells", 3GPP DRAFT; GP-100295_CR 44.018-0822 REV 2 MEASUREMENT REPORT FOR CSG CELLS (REL-9), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Berlin, Germany; 20100305, 25 February 2010 (2010-02-25), XP050594683, [retrieved on 2010-02-25]
- "3rd Generation Partnership Project; Technical Specification Group Radio Access Network; Evolved Universal Terrestrial Radio Access (E-UTRA); Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 21 April 2010 (2010-04-21), pages 1-236, XP050402560, [retrieved on 2010-04-21]
- 3GPP: "3rd Generation Partnership Project; Technical Specification Group Radio Access Network; Radio Resource Control (RRC); Protocol specification (Release 9)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.1 29 April 2010 (2010-04-29), page 1,54-96,123-125,622-632,672-674,961-962,10 87, XP002694298, Retrieved from the Internet: URL:http://www.3gpp.org/ftp/Specs/archive/ 25_series/25.331/25331-921.zip

## Description

### FIELD OF THE INVENTION

The present invention relates to the field of communication technologies, and in particular, to a method, an apparatus, and a system for sending measurement reports.

### BACKGROUND OF TECHNOLOGY

Currently, a UTRAN (UMTS Radio Access Network) Home NodeB (Home NodeB) and/or an E-UTRAN (Evolved UMTS Radio Access Network) Home NodeB (Home NodeB) may be deployed in a GERAN (GSM/EDGE Radio Access Network). The cell governed by the UTRAN home NodeB and the E-UTRAN home eNodeB may be called a CSG (Closed Subscriber Group) cell.

To support the terminal's mobility to the CSG cell in a connected state, the terminal needs to report the measurement report of the CSG cell. In the coverage scope of the macro cell, a CSG cell is not uniquely identifiable by a physical layer identifier, but is uniquely identified by a global cell identifier in a PLMN (Public Land Mobile Network) such as Home NodeB or Home eNodeB.

Meanwhile, access network sharing exists currently. Access network sharing means that the independent core network of each of multiple operators is connected to an access network, and the access network provides services for all the core networks. The identifiers of the operators that share the cell are broadcast in the cell of the access network, namely, a PLMN ID list is broadcast.

In the handover process, the network side may select a neighboring CSG cell as a target CSG cell according to the measurement report reported by the terminal, and the network side needs the measurement report to indicate the routing path to the target CSG cell in order to route the handover required message to the home NodeB of the target CSG cell. The routing path of the target CSG cell is related to the PLMN ID.

Currently, in the case of access network sharing, the PLMN ID included in the measurement report reported by the terminal is the first PLMN ID in the PLMN ID list received by the terminal, but the first PLMN ID is possibly not the operator network subscribed by the terminal, which makes the terminal roam.

Document Huawei Technologies Co., Ltd. "Measurement Report for CSG cells", 3GPP Draft, GP-100297_CR 44.060-1336 REV 2 MEASUREMENT REPORT FOR CSG CELLS(REL-9), 3 RD GENERATION PARTNERSHIP PROJECT(3GPP), MOBILE COMPETENCE CENTRE; 650, ROUTE DES LUCIOLES; F-06921 SOHPIA-ANTIPOLIS CEDEX; FRANCE, VOL. TSG GERAN, NO. BERLIN, GERMANY; 20100305, 25 FEBRUARY 2010(2010-02-25), XP050594685 relates to change requests in 3GPP specification of:
1. The PACKET CELL CHANGE NOTIFICATION and PACKET CELL CHANGE ORDER messages have been modified with a release 9 extension to provide: An indicator for target CSG cell without routing parameters; OR: The routing parameters (Cell Identity, and optionally the PLMN-ID) and CSG-ID for a target UTRAN CSG cell.
2. The PACKET CELL CHANGE FAILURE message has been modified with a release 9 extension to provide the routing parameters (as above described) and CSG-ID for a target UTRAN/E-UTRAN CSG cell.
3. The PACKET MEASUREMENT REPORT and PACKET ENHANCED MEASUREMENT REPORT messages have been modified with a release 9 extension to provide: An indicator for CSG reporting if PS handover is not supported; OR: The routing parameters (Cell Identity, and optionally the PLMN-ID) and CSG-ID for a target UTRAN CSG cell.

Document Huawei Technologies Co., Ltd. "Measurement Report for CSG cells", 3GPP Draft, GP-100295_CR 44.018-0822 REV 2 MEASUREMENT REPORT FOR CSG CELLS(REL-9), 3 RD GENERATION PARTNERSHIP PROJECT(3GPP), MOBILE COMPETENCE CENTRE; 650, ROUTE DES LUCIOLES; F-06921 SOPHIA-ANTIPOLIS CEDEX; FRANCE, VOL. TSG GERAN, NO. BERLIN, GERMANY; 20100305, 25 FEBRUARY 2010(2010-02-25), XP 050594683 relates to change requests in 3GPP specification of :
1. The MEASUREMENT REPORT message has been modified with a release 9 extension to provide: Reporting measurement result of one UTRAN CSG cell with routing information incl. Cell Identity, CSG-ID, and optionally the PLMN-ID. A PLMN-ID Ind field is introduced to indicate whether the PLMN-ID field is present. If the target CSG cell is of the same PLMN-ID as for the serving cell, then the PLMN-ID Ind should be the value '0' so that the PLMN-ID is not included in measurement report. If no more than (30 - NUM_E-UTRAN_FREQUENCIES) GSM ARFCN frequencies are included in the BA (list), the BCCH-FREQ-NCELL = (30 - NUM_E-UTRAN_FREQUENCIES) could be used to indicate the UTRAN CSG cell in the current Measurement Report message.
2. The ENHANCED MEASUREMENT REPORT messages have been modified with a release 9 extension to provide the measurement result of the UTRAN CSG cell with routing information incl. Cell Identity, CSG-ID, and optionally the PLMN-ID (24bits).

The document "3rd Generation Partnership Project; Technical Specification Group Radio Access Network; Evolved Universal Terrestrial Radio Access (E-UTRA); Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, April 21, 2010, pages 1-236, XP050402560 relates to technical contents about specifying the Radio Resource Control protocol for the UE-E-UTRAN radio interface. The document also includes: the radio related information transported in a transparent container between source eNB and target eNB upon inter eNB handover; the radio related information transported in a transparent container between a source or target eNB and another system upon inter RAT handover.

The document 3GPP: "3rd Generation Partnership Project; Technical Specification Group Radio Access Network; Radio Resource Control (RRC); Protocol specification (Release 9)", 3GPP STANDARD; 3GPP TS 25.331, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, no. V9.2.1 April 29, 2010, XP002694298, relates to specifying the Radio Resource Control protocol for the UE-UTRAN radio interface. The scope of the document includes: (1) the information to be transported in a transparent container between source RNC and target RNC in connection with SRNC relocation; (2) the information to be transported in a transparent container between a target RNC and another system.

### SUMMARY OF THE INVENTION

The present invention provides a method and a terminal according to claims 1 and 8.

Through the embodiments of the present invention, the terminal roaming is reduced by designing the measurement reports. In the following, the parts of the description and drawings referring to embodiments which are not covered by the claims are not presented as embodiments of the invention but as background art or examples useful for understanding the invention.

### BRIEF DESCRIPTION OF THE DRAWINGS

FIG. 1 illustrates a schematic diagram of a communication system according to an embodiment of the present invention;
FIG. 2 illustrates a schematic diagram of a method for indicating a routing path of a CSG cell according to an embodiment of the present invention; and
FIG. 3 illustrates a schematic diagram of units of a terminal according to an embodiment of the present invention.

### DETAILED DESCRIPTION OF THE EMBODIMENTS

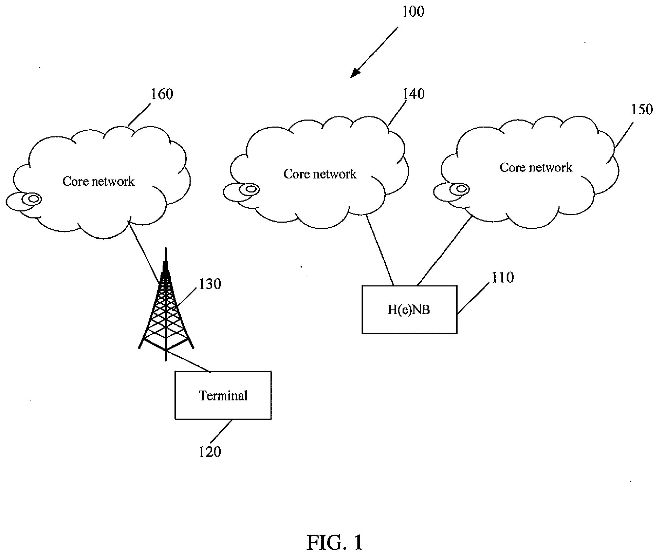

FIG. 1 illustrates a communication system 100 according to an embodiment of the present invention. The communication system 100 includes a Home NodeB 110, two different core networks 140 and 150 connected with the Home NodeB 110, a macro NodeB 130, a core network 160 connected with the macro NodeB, and a terminal 120. The macro NodeB 130 is located in a GERAN network. The terminal 120 may perform data communication with the macro NodeB 130 or Home NodeB 110. The terminal 120 is covered in the macro cell governed by the macro NodeB 130. The cell governed by the Home NodeB 110 is the CSG cell, and the CSG cell is adjacent to the macro cell governed by the macro NodeB 130.

In this embodiment of the present invention, the Home NodeB 110 may be a UTRAN home NodeB or an E-UTRAN home NodeB; the terminal 120 may be a radio device (Radio device), a cellular telephone device (Cellular telephone device), a computer device (Computer device), a personal communication system device (Personal communication system device), or any other device equipped with radio communication.

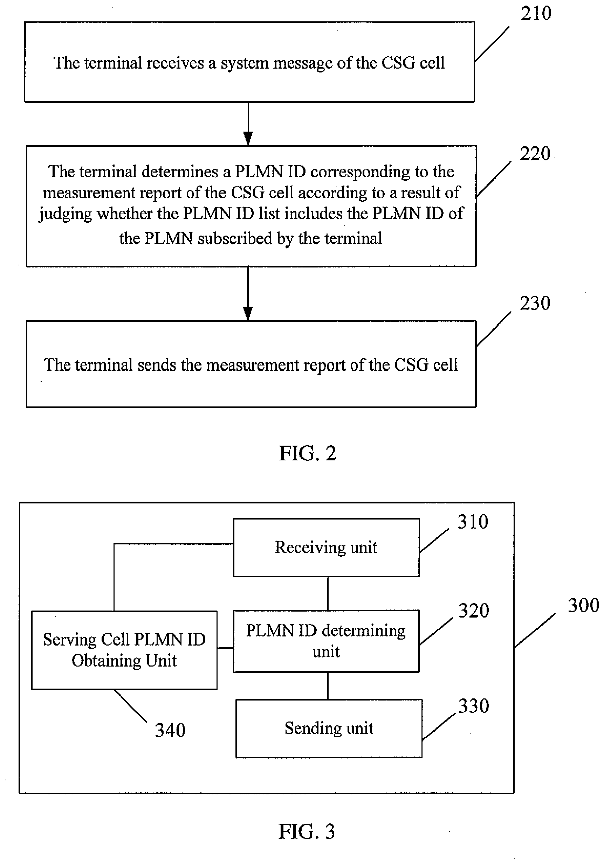

FIG. 2 illustrates a method for sending a measurement report according to an embodiment of the present invention. The method includes the following steps:
210. The terminal receives a system message of the CSG cell.

The system message of the CSG cell includes a PLMN ID list of the public land mobile network which the CSG cell belongs to and a first routing parameter of the CSG cell. The first routing parameter includes the cell identifier of the CSG cell, or includes the cell identifier of the CSG cell and a tracking area code of the CSG cell. In the following embodiments of the present invention, the system message of the CSG cell carries a PLMN ID list, and the PLMN ID list may include one or more PLMND IDs.

220. The terminal determines a PLMN ID corresponding to the measurement report of the CSG cell according to a result of judging whether the PLMN ID list includes the PLMN ID of the public land mobile network subscribed by the terminal.

In an embodiment of the present invention, the terminal may obtain the PLMN ID of the serving cell. The serving cell is a macro cell in a GERAN network.

For example, in an idle state, the terminal may read the system message broadcast by the serving cell. The system message includes the PLMN ID of the serving cell. After the system message is obtained, if the serving cell where the terminal resides does not change, the PLMN ID is also the PLMN ID of the serving cell of the terminal in the connected state. After the system message is obtained, if the serving cell where the terminal resides changes, then, in a circuit switched (Circuit Switch) domain, the network side may send a message that carries the PLMN ID of the serving cell to the terminal. The message may be a message that instructs the cell to change, for example, a handover command (Handover Command) message, or an immediate assignment (Immediate Assignment) message. The sending manner of the message may be: the terminal requests the network side to send the PLMN ID, or the network side sends the PLMND ID to the terminal actively. In a packet switch (Packet Switch) domain, the system message delivered by the network side to the terminal before the handover includes the PLMN ID of the serving cell.

In another embodiment of the present invention, the system message broadcast by the serving cell may include a PLMN ID list, for example. The terminal receives the PLMN ID list of the serving cell. Besides, the terminal may determine the first PLMN ID in the PLMN ID list of the serving cell as the PLMN ID of the serving cell.

After obtaining the PLMN ID of the serving cell, the terminal judges whether the PLMN ID of the PLMN subscribed by the terminal is contained in the received PLMN ID list of the CSG cell. The PLMN ID of the PLMN subscribed by the terminal may also called as home PLMN ID.

If the home PLMN ID of the terminal is contained in the received PLMN ID list of the CSG cell, when the PLMN ID of the serving cell is the same as the home PLMN ID of the terminal, the CSG cell measurement report reported by the terminal may include no PLMN ID. After receiving the measurement report of the CSG cell, the network side believes that the PLMN ID of the CSG cell is the same as the PLMN ID of the serving cell. With the measurement report carrying no PLMN ID, the space occupied by the CSG measurement report is saved. The saved space may be used to report information of other cells, for example. When the PLMN ID of the serving cell is different from the home PLMN ID of the terminal, the CSG cell measurement report reported by the terminal includes the home PLMN ID of the terminal. When the home PLMN ID of the terminal is contained in the received PLMN ID list of the CSG cell, the PLMN ID indicated by the CSG cell measurement report reported by the terminal is the home PLMN ID of the terminal. In this way, the network node of the access network can hand over the current service to the operator core network subscribed by the user when handover occurs, thereby reducing or avoiding expenses caused by roaming of the terminal.

If the home PLMN ID of the terminal is not contained in the received PLMN ID list of the CSG cell, when the PLMN ID of the serving cell is the same as the home PLMN ID of the terminal, the CSG cell measurement report reported by the terminal may include no PLMN ID. After receiving the measurement report of the CSG cell, the network side believes that the PLMN ID of the CSG cell is the same as the PLMN ID of the serving cell. With the measurement report carrying no PLMN ID, the space occupied by the CSG measurement report is saved. The saved space may be used to report information of other cells, for example. When the PLMN ID of the serving cell is different from the home PLMN ID of the terminal, the CSG cell measurement report reported by the terminal may include the first PLMN ID in the PLMN ID list of the CSG cell which is received by the terminal.

In another embodiment of the present invention, when the terminal lacks the PLMN ID of the serving cell, or when the terminal receives a PLMN ID list of the serving cell, if the home PLMN ID of the terminal is contained in the received PLMN ID list of the CSG cell, the CSG cell measurement report reported by the terminal includes the home PLMN ID of the terminal. In this way, the network node of the access network can hand over the current service to the operator core network subscribed by the user when handover occurs, thereby reducing or avoiding expenses caused by roaming of the terminal; otherwise, the CSG cell measurement report reported by the terminal includes the first PLMN ID in the PLMN ID list of the CSG cell which is received by the terminal.

230. The terminal sends the measurement report of the CSG cell.

The measurement report indicates the PLMN ID of the CSG cell, and includes the first routing parameter.

The terminal sends the measurement report to the network device. For example, the network device may be an eNodeB (eNB) in the E-UTRAN network, or an RNC (Radio Network Controller, radio network controller) in the UTRAN network, or a BSC (Base Station Controller, base station controller) in the GERAN network. The network device can determine the routing path to the CSG cell according to the CSG cell PLMN ID and the first routing parameter that are indicated in the measurement report. For example, when handover is required, the network device may route a handover required (Handover Required) message to the home NodeB that covers the CSG cell.

In this embodiment, according to a result of judging whether the PLMN ID list includes the PLMN ID of the public land mobile network subscribed by the terminal, the terminal may determine the PLMN ID corresponding to the CSG cell measurement report reported by the terminal. In this way, the path to the CSG cell is indicated by designing the PLMN ID indicated in the measurement report, roaming of the terminal is reduced or avoided, and the space occupied by the measurement report of the CSG cell is saved.

As shown in FIG. 3, an embodiment of the present invention illustrates a terminal 300 in form of example. The terminal 300 can implement all functions of the method embodiment described above. The terminal 300 may implement all functions of the foregoing method embodiment through software and/or hardware. For example, the terminal 300 may include one or more processors, and the one or more processors can implement all functions of the foregoing method embodiment. For example, the terminal 300 may include a receiving unit 310, a public land mobile network identifier determining unit 320, and a sending unit 330.

The receiving unit 310 is configured to: receive a system message of a CSG cell, where the system message carries a public land mobile network identifier list of a public land mobile network which the CSG cell belongs to and a first routing parameter of the CSG cell, and the first routing parameter includes a cell identifier of the CSG cell or includes the cell identifier and a tracking area code of the CSG cell;

The public land mobile network identifier determining unit 320 is configured to determine a public land mobile network identifier corresponding to the measurement report of the CSG cell according to a result of judging whether the public land mobile network identifier list includes the public land mobile network identifier of the public land mobile network subscribed by the terminal; and

The sending unit 330 is configured to send the measurement report of the CSG cell, where the measurement report indicates the public land mobile network identifier of the CSG cell and includes the first routing parameter.

Further, in another embodiment of the present invention, the step of, the PLMN ID determining unit 320 determining a public land mobile network identifier corresponding to the measurement report of the CSG cell according to the result of judging whether the public land mobile network identifier list includes the public land mobile network identifier of the public land mobile network subscribed by the terminal, includes: judging whether the public land mobile network identifier of the public land mobile network subscribed by the terminal is contained in the public land mobile network identifier list; and, if the public land mobile network identifier of the public land mobile network subscribed by the terminal is contained in the public land mobile network identifier list, determining that the public land mobile network identifier corresponding to the measurement report of the CSG cell is the public land mobile network identifier of the public land mobile network subscribed by the terminal, where the measurement report includes the public land mobile network identifier of the public land mobile network subscribed by the terminal.

Further, in another embodiment of the present invention, the terminal 300 further includes a serving cell public land mobile network identifier obtaining unit 340. The serving cell public land mobile network identifier obtaining unit 340 is configured to obtain the public land mobile network identifier of the serving cell.

For example, in an embodiment of the present invention, the receiving unit 310 may receive the public land mobile network identifier of the serving cell, and the serving cell public land mobile network identifier obtaining unit 340 obtains the public land mobile network identifier of the serving cell from the receiving unit 310. In another embodiment of the present invention, the receiving unit 310 is further configured to receive the public land mobile network identifier list of the serving cell. The step performed by the serving cell public land mobile network identifier obtaining unit 340 to obtain the public land mobile network identifier of the serving cell may include: The serving cell public land mobile network identifier obtaining unit 340 may determine the first public land mobile network identifier in the public land mobile network identifier list of the serving cell as the public land mobile network identifier of the serving cell.

The step of, the public land mobile network identifier determining unit 320 determining a public land mobile network identifier corresponding to the measurement report of the CSG cell according to the result of judging whether the public land mobile network identifier list includes the public land mobile network identifier of the public land mobile network subscribed by the terminal, includes: determining a public land mobile network identifier corresponding to the measurement report of the CSG cell according to the public land mobile network identifier of the serving cell and according to a result of judging whether the public land mobile network identifier list includes the public land mobile network identifier of the public land mobile network subscribed by the terminal.

Further, in another embodiment of the present invention, the step of, the public land mobile network identifier determining unit 320 determining a public land mobile network identifier corresponding to the measurement report of the CSG cell according to the public land mobile network identifier of the serving cell and the result of judging whether the public land mobile network identifier list includes the public land mobile network of the public land mobile network subscribed by the terminal, includes: judging whether the public land mobile network identifier of the public land mobile network subscribed by the terminal is contained in the public land mobile network identifier list; if it is contained in the public land mobile network identifier list, judging whether the public land mobile network identifier of the serving cell is the same as the public land mobile network identifier of the public land mobile network subscribed by the terminal; if the public land mobile network identifier of the serving cell is the same, determining that the public land mobile network identifier corresponding to the measurement report of the CSG cell is the public land mobile network identifier of the serving cell; if the public land mobile network identifier of the serving cell is not the same, determining that the public land mobile network identifier corresponding to the measurement report of the CSG cell is the public land mobile network identifier of the public land mobile network subscribed by the terminal.

Further, in another embodiment of the present invention, the step of, the public land mobile network identifier determining unit 320 determining a public land mobile network identifier corresponding to the measurement report of the CSG cell according to the public land mobile network identifier of the serving cell and the result of judging whether the public land mobile network identifier list includes the public land mobile network identifier of the public land mobile network subscribed by the terminal, includes: judging whether the public land mobile network identifier of the public land mobile network subscribed by the terminal is contained in the public land mobile network identifier list; if it is not contained in the public land mobile network identifier list, judging whether the public land mobile network identifier of the serving cell is contained in the public land mobile network identifier list; if the public land mobile network identifier of the serving cell is contained in the public land mobile network identifier list, determining that the public land mobile network identifier corresponding to the measurement report of the CSG cell is the public land mobile network identifier of the serving cell; if the public land mobile network identifier of the serving cell is not contained in the public land mobile network identifier list, determining that the public land mobile network identifier corresponding to the measurement report of the CSG cell is the first public land mobile network identifier in the public land mobile network identifier list, where the measurement report includes the public land mobile network identifier corresponding to the measurement report of the CSG cell.

A communication system is provided in an exemplary embodiment of the present invention. The communication system includes at least one terminal. The terminal can implement all functions of the method embodiment described above. For more details of the terminal, see the embodiments described above.

Through the description of the foregoing embodiments, persons skilled in the art may clearly understand that the present invention may be implemented by means of software and a necessary general hardware platform, or of course, by means of a hardware, but the former is preferred in many cases. Based on such understanding, the essence of the technical solution under the present invention or the contributions to the prior art may be embodied as a software product. The software product is stored in a storage medium, and includes several instructions that enable a computer device (a PC, a server or a network device) to perform all or part of the steps of the methods provided in the embodiments of the present invention. Examples of the storage medium include various media capable of storing program codes, such as USB flash disk, mobile hard disk, read-only memory (ROM), random access memory (RAM), magnetic disk, or CD-ROM.

Understandably, in the embodiments provided by the present application, the disclosed systems, apparatuses and methods may be implemented in other modes. For example, the apparatus embodiments above are illustrative in nature, and the units of the apparatus are defined from the perspective of logical functions only and may be defined in a different way in practical application. For example, multiple units or components may be combined or integrated into another system, or some features may be ignored or not executed. Besides, the coupling, direct coupling or communication connection illustrated or discussed herein may be implemented through indirect coupling or communication connection between interfaces, apparatuses or units, and may be electronic, mechanical, or in other forms.

The units described as stand-alone components above may be separated physically or not; and the components illustrated as units may be physical units or not, namely, they may be located in one place, or distributed on multiple network elements. Some or all of the units described above may be selected as required to fulfill the objectives of the technical solutions of the present invention,

Besides, all function units in the embodiments of the present invention may be physically stand-alone, or integrated into a processing module, or two or more of the units are integrated into one unit. The integrated unit may be hardware or a software function unit. When being implemented as a software unit and sold or used as a stand-alone product, the integrated unit may be stored in a computer-readable storage medium.

The above descriptions are merely preferred embodiments of the present invention, but not intended to limit the protection scope of the present invention. Any modifications, variations or replacement that can be easily derived by those skilled in the art shall fall within the protection scope of the present invention. Therefore, the scope of the present invention is subject to the appended claims.

## Claims

1. A method for sending a measurement report, **characterized by**, comprising:
receiving (210), by a terminal, a system message of a closed subscriber group, CSG, cell, wherein the system message carries a public land mobile network identifier list of a public land mobile network, PLMN, which the CSG cell belongs to and a first routing parameter of the CSG cell, and the first routing parameter comprises a cell identifier of the CSG cell or comprises the cell identifier and a tracking area code of the CSG cell;
determining (220), by the terminal, a public land mobile network identifier corresponding to the measurement report of the CSG cell according to a result of judging whether the public land mobile network identifier list comprises the public land mobile network identifier of the home PLMN subscribed by the terminal; and
sending (230), by the terminal, the measurement report of the CSG cell, wherein the measurement report indicates the public land mobile network identifier of the CSG cell and comprises the first routing parameter.

2. The method according to claim 1, wherein the determining, by the terminal, the public land mobile network identifier corresponding to the measurement report of the CSG cell according to the result of judging whether the public land mobile network identifier list comprises the public land mobile network identifier of the home public land mobile network subscribed by the terminal, comprises:
judging whether the public land mobile network identifier of the home public land mobile network subscribed by the terminal is contained in the public land mobile network identifier list; and
if the public land mobile network identifier of the public land mobile network home subscribed by the terminal is contained in the public land mobile network identifier list, determining, by the terminal, that the public land mobile network identifier corresponding to the measurement report of the CSG cell is the public land mobile network identifier of the home public land mobile network subscribed by the terminal, wherein:
the measurement report comprises the public land mobile network identifier of the home public land mobile network subscribed by the terminal.

3. The method according to claim 1, wherein the determining, by the terminal, the public land mobile network identifier corresponding to the measurement report of the CSG cell according to the result of judging whether the public land mobile network identifier list comprises the public land mobile network identifier of the home public land mobile network subscribed by the terminal, comprises:
obtaining, by the terminal, the public land mobile network identifier of a serving cell; and
determining, by the terminal, a public land mobile network identifier corresponding to the measurement report of the CSG cell according to the public land mobile network identifier of the serving cell and according to a result of judging whether the public land mobile network identifier list comprises the public land mobile network identifier of the home PLMN subscribed by the terminal.

4. The method according to claim 3, wherein the terminal's obtaining the public land mobile network identifier of the serving cell comprises:
receiving, by the terminal, a public land mobile network identifier list of the serving cell; and
determining, by the terminal, a first public land mobile network identifier in the public land mobile network identifier list of the serving cell as the public land mobile network identifier of the serving cell.

5. The method according to claim 3 or 4, wherein the determining, by the terminal, the public land mobile network identifier corresponding to the measurement report of the CSG cell according to the public land mobile network identifier of the serving cell and according to the result of judging whether the public land mobile network identifier list comprises the public land mobile network identifier of the home public land mobile network subscribed by the terminal, comprises:
judging, by the terminal, whether the public land mobile network identifier of the home public land mobile network subscribed by the terminal is contained in the public land mobile network identifier list;
if the public land mobile network identifier of the home public land mobile network subscribed by the terminal is contained in the public land mobile network identifier list, judging, by the terminal, whether the public land mobile network identifier of the serving cell is same as the public land mobile network identifier of the home public land mobile network subscribed by the terminal;
if the public land mobile network identifier of the serving cell is same as the public land mobile network identifier of the home public land mobile network subscribed by the terminal, determining, by the terminal, that the public land mobile network identifier corresponding to the measurement report of the CSG cell is the public land mobile network identifier of the serving cell;
if the public land mobile network identifier of the serving cell is not same as the public land mobile network identifier of the home public land mobile network subscribed by the terminal, determining, by the terminal, that the public land mobile network identifier corresponding to the measurement report of the CSG cell is the public land mobile network identifier of the home public land mobile network subscribed by the terminal.

6. The method according to claim 3 or 4, wherein the terminal's determining the public land mobile network identifier corresponding to the measurement report of the CSG cell according to the public land mobile network identifier of the serving cell and according to the result of judging whether the public land mobile network identifier list comprises the public land mobile network identifier of the home public land mobile network subscribed by the terminal, comprises:
judging, by the terminal, whether the public land mobile network identifier of the home public land mobile network subscribed by the terminal is contained in the public land mobile network identifier list;
if the public land mobile network identifier of the home public land mobile network subscribed by the terminal is not contained in the public land mobile network identifier list, judging, by the terminal, whether the public land mobile network identifier of the serving cell is contained in the public land mobile network identifier list;
if the public land mobile network identifier of the serving cell is contained in the public land mobile network identifier list, determining, by the terminal, that the public land mobile network identifier corresponding to the measurement report of the CSG cell is the public land mobile network identifier of the serving cell;
if the public land mobile network identifier of the serving cell is not contained in the public land mobile network identifier list, determining, by the terminal, that the public land mobile network identifier corresponding to the measurement report of the CSG cell is the first public land mobile network identifier in the public land mobile network identifier list, wherein the measurement report comprises the public land mobile network identifier corresponding to the measurement report of the CSG cell.

7. The method according to claim 5, wherein if the public land mobile network identifier of the serving cell is same as the public land mobile network identifier of the home public land mobile network subscribed by the terminal, the measurement report carries no public land mobile network identifier; or,
if the public land mobile network identifier of the serving cell is not same as the public land mobile network identifier of the home public land mobile network subscribed by the terminal, the measurement report includes the public land mobile network identifier of the home public land mobile network subscribed by the terminal.

8. A terminal, **characterized by**, comprising:
a receiving unit (310), configured to receive a system message of a closed subscriber group, CSG, cell, wherein the system message carries a public land mobile network identifier list of a public land mobile network, PLMN, which the CSG cell belongs to and a first routing parameter of the CSG cell, and the first routing parameter comprises a cell identifier of the CSG cell or comprises the cell identifier and a tracking area code of the CSG cell;
a public land mobile network identifier determining unit (320), configured to determine a public land mobile network identifier corresponding to a measurement report of the CSG cell according to a result of judging whether the public land mobile network identifier list comprises the public land mobile network identifier of the home public land mobile network subscribed by the terminal; and
a sending unit (330), configured to send the measurement report of the CSG cell, wherein the measurement report indicates the public land mobile network identifier of the CSG cell and comprises the first routing parameter.

9. The terminal according to claim 8, wherein the public land mobile network identifier determining unit (310) determines the public land mobile network identifier corresponding to the measurement report of the CSG cell by:
judging whether the public land mobile network identifier of the home public land mobile network subscribed by the terminal is contained in the public land mobile network identifier list;
if the public land mobile network identifier of the home public land mobile network subscribed by the terminal is contained in the public land mobile network identifier list, determining that the public land mobile network identifier corresponding to the measurement report of the CSG cell is the public land mobile network identifier of the home public land mobile network subscribed by the terminal, wherein:
the measurement report comprises the public land mobile network identifier of the PLMN subscribed by the terminal.

10. The terminal according to claim 8, wherein the terminal further comprises a serving cell public land mobile network identifier obtaining unit (340) configured to obtain the public land mobile network identifier of the serving cell; and
the public land mobile network identifier determining unit (320) determines the public land mobile network identifier corresponding to the measurement report of the CSG cell by:
determining a public land mobile network identifier corresponding to the measurement report of the CSG cell according to the public land mobile network identifier of the serving cell and according to a result of judging whether the public land mobile network identifier list comprises the public land mobile network identifier of the home public land mobile network subscribed by the terminal.

11. The terminal according to claim 10, wherein the receiving unit (310) is further configured to receive a public land mobile network identifier list of the serving cell;
the serving cell public land mobile network identifier obtaining unit (340) configured to obtain the public land mobile network identifier of the serving cell comprises:
determining, by the serving cell public land mobile network identifier obtaining unit (340), a first public land mobile network identifier in the public land mobile network identifier list of the serving cell as the public land mobile network identifier of the serving cell.

12. The terminal according to claim 10 or 11, wherein the public land mobile network identifier determining unit (320) determines the public land mobile network identifier corresponding to the measurement report of the CSG cell by:
judging whether the public land mobile network identifier of the home public land mobile network subscribed by the terminal is contained in the public land mobile network identifier list;
if the public land mobile network identifier of the home public land mobile network subscribed by the terminal is contained in the public land mobile network identifier list, judging whether the public land mobile network identifier of the serving cell is same as the public land mobile network identifier of the home public land mobile network subscribed by the terminal;
if the public land mobile network identifier of the serving cell is same as the public land mobile network identifier of the home public land mobile network subscribed by the terminal, determining that the public land mobile network identifier corresponding to the measurement report of the CSG cell is the public land mobile network identifier of the serving cell;
if the public land mobile network identifier of the serving cell is not same as the public land mobile network identifier of the home public land mobile network subscribed by the terminal, determining that the public land mobile network identifier corresponding to the measurement report of the CSG cell is the public land mobile network identifier of the home public land mobile network subscribed by the terminal.

13. The terminal according to claim 10 or 11, wherein the public land mobile network identifier determining unit (320) determines the public land mobile network identifier corresponding to the measurement report of the CSG cell by:
judging whether the public land mobile network identifier of the home public land mobile network subscribed by the terminal is contained in the public land mobile network identifier list;
if the public land mobile network identifier of the home public land mobile network subscribed by the terminal is not contained in the public land mobile network identifier list, judging whether the public land mobile network identifier of the serving cell is contained in the public land mobile network identifier list;
if the public land mobile network identifier of the serving cell is contained in the public land mobile network identifier list, determining that the public land mobile network identifier corresponding to the measurement report of the CSG cell is the public land mobile network identifier of the serving cell;
if the public land mobile network identifier of the serving cell is not contained in the public land mobile network identifier list, determining that the public land mobile network identifier corresponding to the measurement report of the CSG cell is a first public land mobile network identifier in the public land mobile network identifier list, wherein the measurement report comprises the public land mobile network identifier corresponding to the measurement report of the CSG cell.

14. The terminal according to claim 12, wherein if the public land mobile network identifier of the serving cell is same as the public land mobile network identifier of the home public land mobile network subscribed by the terminal, the measurement report carries no public land mobile network identifier; or,
if the public land mobile network identifier of the serving cell is not same as the public land mobile network identifier of the home public land mobile network subscribed by the terminal, the measurement report includes the public land mobile network identifier of the home public land mobile network subscribed by the terminal.

## Patentansprüche

1. Verfahren zur Verschachtelungsverarbeitung in einem System eines drahtlosen lokalen Netzwerks bzw. WLAN-System, **dadurch gekennzeichnet, dass** das Verfahren Folgendes umfasst:
Erhalten (301, 402, 501), durch eine WLAN-Vorrichtung, einer vorbestimmten Anzahl von Kennungen gültiger Positionen aus einer beliebigen Unterverschachtelungsverarbeitung von mindestens zwei Unterverschachtelungsverarbeitungen, die in einer Verschachtelungsverarbeitung enthalten sind, wobei die gültigen Positionen Eingangs-/Ausgangspositionen der beliebigen Unterverschachtelungsverarbeitung sind und zum Senden von zu sendenden Datenbits verwendet werden und die Anzahl der gültigen Positionen geringer als die Anzahl aller Eingangs-/Ausgangspositionen der beliebigen Unterverschachtelungsverarbeitung ist;
Bestimmen (302, 403, 502) von gültigen Eingangspositionen der Verschachtelungsverarbeitung gemäß den Kennungen der gültigen Positionen;
Senden (303, 404, 503) der zu sendenden Datenbits in den gültigen Eingangspositionen und Senden von Bit 0 und/oder Bit 1 oder keinem Datenbit in anderen nicht gültigen Eingangspositionen der Verschachtelungsverarbeitung außer den gültigen Eingangspositionen;
Modulieren (304, 405, 504) von Datenbits, die in Ausgangspositionen der Verschachtelungsverarbeitung gesendet werden, damit Modulationssignale erhalten werden, und jeweiliges Abbilden der Modulationssignale auf entsprechende Datensubträger,
wobei das Verfahren ferner Folgendes umfasst:
Bestimmen einer vorbestimmten Anzahl von Positionen gültiger Datensubträger, die zum Senden der zu sendenden Datenbits gemäß einer vorbestimmten Regel verwendet werden,
wobei das Erhalten einer vorbestimmten Anzahl von Kennungen gültiger Positionen aus einer beliebigen Unterverschachtelungsverarbeitung, die in der Verschachtelungsverarbeitung enthalten ist, Folgendes umfasst:
zufälliges Erhalten (501) der vorbestimmten Anzahl der Kennungen der gültigen Positionen aus einer beliebigen Unterverschachtelungsverarbeitung, die in der Verschachtelungsverarbeitung enthalten ist, gemäß der vorbestimmten Anzahl von Positionen der bestimmten gültigen Datensubträger und Bestimmen von gültigen Ausgangspositionen der Verschachtelungsverarbeitung gemäß den Kennungen der gültigen Positionen,
wobei das jeweilige Abbilden der Modulationssignale auf die entsprechenden Datensubträger Folgendes umfasst:
jeweiliges Abbilden (504) der Modulationssignale, die den in den gültigen Ausgangspositionen geführten Datenbits entsprechen, auf die entsprechenden Datensubträger über eine Abbildungsverarbeitung der Datensubträger.

2. Verfahren nach Anspruch 1, wobei die Verschachtelungsverarbeitung mindestens eine einmalige Unterverschachtelungsverarbeitung umfasst.

3. Verfahren nach Anspruch 2, wobei, falls die Verschachtelungsverarbeitung mindestens eine zweimalige Unterverschachtelungsverarbeitung umfasst, eine Ausgangsposition zum Durchführen einer gegenwärtigen Unterverschachtelungsverarbeitung eine Eingangsposition einer nächsten Unterverschachtelungsverarbeitung ist und/oder eine Ausgangsposition zum Durchführen einer vorhergehenden Unterverschachtelungsverarbeitung eine Eingangsposition einer gegenwärtigen Unterverschachtelungsverarbeitung ist;
eine Ausgangsposition der Verschachtelungsverarbeitung eine Ausgangsposition zum Durchführen der letzten Unterverschachtelungsverarbeitung ist; eine Eingangsposition der Verschachtelungsverarbeitung eine Eingangsposition zum Durchführen der ersten Unterverschachtelungsverarbeitung ist und die gültigen Eingangspositionen der Verschachtelungsverarbeitung gültige Eingangspositionen zum Durchführen der ersten Unterverschachtelungsverarbeitung sind.

4. Verfahren nach Anspruch 1, wobei, falls Bit 0 und/oder Bit 1 in anderen nicht gültigen Eingangspositionen der Verschachtelungsverarbeitung außer den gültigen Eingangspositionen gesendet wird bzw. werden, das Modulieren von Datenbits, die in Ausgangspositionen der Verschachtelungsverarbeitung gesendet werden, damit Modulationssignale erhalten werden, Folgendes umfasst:
Modulieren von zu verschachtelnden Bits, die in mindestens einer gültigen Eingangsposition gesendet werden, damit mindestens ein Modulationssignal erhalten wird, und Modulieren von zu verschachtelnden Bits, die in mindestens einer nicht gültigen Eingangsposition gesendet werden, damit mindestens ein Modulationssignal erhalten wird, bis die Modulation von Datenbits, die in allen Ausgangspositionen der Verschachtelungsverarbeitung gesendet werden, beendet ist.

5. Verfahren nach Anspruch 4, wobei, falls kein Datenbit in anderen nicht gültigen Eingangspositionen der Verschachtelungsverarbeitung außer den gültigen Eingangspositionen gesendet wird, das Modulieren von Datenbits, die in Ausgangspositionen der Verschachtelungsverarbeitung gesendet werden, damit Modulationssignale erhalten werden, Folgendes umfasst:
Modulieren von zu verschachtelnden Bits, die in mindestens einer gültigen Eingangsposition gesendet werden, damit mindestens ein Modulationssignal erhalten wird, bis die Modulation von Datenbits, die in allen Ausgangspositionen der Verschachtelungsverarbeitung gesendet werden, beendet ist.

6. Verfahren nach Anspruch 4 oder 5, wobei das Bestimmen der vorbestimmten Anzahl von Positionen der gültigen Datensubträger, die zum Senden der zu sendenden Datenbits gemäß einer vorbestimmten Regel verwendet werden, Folgendes umfasst:
Bestimmen der vorbestimmten Anzahl von Positionen von Datensubträgern mit einem höheren Rauschabstand und/oder einer höheren Kapazität als die Positionen der gültigen Datensubträger.

7. Verfahren zur Verschachtelungsverarbeitung in einem System eines drahtlosen lokalen Netzwerks bzw. WLAN-System, **dadurch gekennzeichnet, dass** das Verfahren Folgendes umfasst:
Erhalten (301, 402, 501), durch eine WLAN-Vorrichtung, einer vorbestimmten Anzahl von Kennungen gültiger Positionen aus einer beliebigen Unterverschachtelungsverarbeitung von mindestens zwei Unterverschachtelungsverarbeitungen, die in einer Verschachtelungsverarbeitung enthalten sind, wobei die gültigen Positionen Eingangs-/Ausgangspositionen der beliebigen Unterverschachtelungsverarbeitung sind und zum Senden von zu sendenden Datenbits verwendet werden und die Anzahl der gültigen Positionen geringer als die Anzahl aller Eingangs-/Ausgangspositionen der beliebigen Unterverschachtelungsverarbeitung ist;
Bestimmen (302, 403, 502) von gültigen Eingangspositionen der Verschachtelungsverarbeitung gemäß den Kennungen der gültigen Positionen;
Senden (303, 404, 503) der zu sendenden Datenbits in den gültigen Eingangspositionen und Senden von Bit 0 und/oder Bit 1 oder keinem Datenbit in anderen nicht gültigen Eingangspositionen der Verschachtelungsverarbeitung außer den gültigen Eingangspositionen;
Modulieren (304, 405, 504) von Datenbits, die in Ausgangspositionen der Verschachtelungsverarbeitung gesendet werden, damit Modulationssignale erhalten werden, und jeweiliges Abbilden der Modulationssignale auf entsprechende Datensubträger,
wobei das Erhalten einer vorbestimmten Anzahl von Kennungen gültiger Positionen aus einer beliebigen Unterverschachtelungsverarbeitung, die in einer Verschachtelungsverarbeitung enthalten ist, Folgendes umfasst:
Bestimmen (401) einer vorbestimmten Anzahl von Positionen gültiger Datensubträger, die zum Senden der zu sendenden Datenbits gemäß einer vorbestimmten Regel verwendet werden;
Erhalten (402) der Kennungen der gültigen Positionen gemäß der vorbestimmten Anzahl von Positionen der bestimmten gültigen Datensubträger,
wobei das jeweilige Abbilden der Modulationssignale auf die entsprechenden Datensubträger Folgendes umfasst:
Eins-zu-Eins-Abbilden (405) der Modulationssignale auf die entsprechenden Datensubträger der Reihe nach, wobei die Datensubträger die gültigen Datensubträger umfassen.

8. Vorrichtung eines drahtlosen lokalen Netzwerks bzw. WLAN-Vorrichtung, **dadurch gekennzeichnet, dass** sie Folgendes umfasst:
einen Verschachteler (71, 81), der dazu konfiguriert ist, eine Verschachtelungsverarbeitung an zu sendenden Datenbits durchzuführen;
einen Prozessor (72, 82), der dazu konfiguriert ist, eine vorbestimmte Anzahl von Kennungen gültiger Positionen aus einer beliebigen Unterverschachtelungsverarbeitung von mindestens zwei Unterverschachtelungsverarbeitungen, die in der durch den Verschachteler (71, 81) durchgeführten Verschachtelungsverarbeitung enthalten sind, zu erhalten, wobei die gültigen Positionen Eingangs-/Ausgangspositionen der beliebigen Unterverschachtelungsverarbeitung sind und zum Senden von zu sendenden Datenbits verwendet werden und die Anzahl der gültigen Positionen geringer als die Anzahl aller Eingangs-/Ausgangspositionen der beliebigen Unterverschachtelungsverarbeitung ist; gültige Eingangspositionen der Verschachtelungsverarbeitung gemäß den Kennungen der gültigen Positionen zu bestimmen; die zu sendenden Datenbits in den gültigen Eingangspositionen zu senden und Bit 0 und/oder Bit 1 oder kein Datenbit in anderen nicht gültigen Eingangspositionen der Verschachtelungsverarbeitung außer den gültigen Eingangspositionen zu senden; die Datenbits, die in Ausgangspositionen der Verschachtelungsverarbeitung gesendet werden, zu modulieren, damit Modulationssignale erhalten werden, und die Modulationssignale jeweils auf entsprechende Datensubträger abzubilden,
wobei der Prozessor (72, 82) ferner dazu konfiguriert ist, eine vorbestimmte Anzahl von Positionen gültiger Datensubträger, die zum Senden von zu sendenden Datenbits gemäß einer vorbestimmten Regel verwendet werden, zu bestimmen; die vorbestimmte Anzahl von Kennungen der gültigen Positionen aus einer beliebigen Unterverschachtelungsverarbeitung, die in der Verschachtelungsverarbeitung enthalten ist, zufällig gemäß der vorbestimmten Anzahl von Positionen der bestimmten gültigen Datensubträger zu erhalten, gültige Ausgangspositionen der Verschachtelungsverarbeitung gemäß den Kennungen der gültigen Positionen zu bestimmen; und die Modulationssignale, die den in den gültigen Ausgangspositionen geführten Datenbits entsprechen, jeweils auf die entsprechenden Datensubträger über eine Abbildungsverarbeitung der Datensubträger abzubilden.

9. WLAN-Vorrichtung nach Anspruch 8, wobei die durch den Verschachteler (71, 81) an den zu sendenden Datenbits durchgeführte Verschachtelungsverarbeitung mindestens eine einmalige Unterverschachtelungsverarbeitung umfasst.

10. WLAN-Vorrichtung nach Anspruch 9, wobei, falls die durch den Verschachteler (71, 81) an den zu sendenden Datenbits durchgeführte Verschachtelungsverarbeitung mindestens eine zweimalige Unterverschachtelungsverarbeitung umfasst, eine Ausgangsposition zum Durchführen einer gegenwärtigen Unterverschachtelungsverarbeitung eine Eingangsposition einer nächsten Unterverschachtelungsverarbeitung ist und/oder eine Ausgangsposition zum Durchführen einer vorhergehenden Unterverschachtelungsverarbeitung eine Eingangsposition einer gegenwärtigen Unterverschachtelungsverarbeitung ist;
eine Ausgangsposition der Verschachtelungsverarbeitung eine Ausgangsposition zum Durchführen der letzten Unterverschachtelungsverarbeitung ist; eine Eingangsposition der Verschachtelungsverarbeitung eine Eingangsposition zum Durchführen der ersten Unterverschachtelungsverarbeitung ist und die gültigen Eingangspositionen der Verschachtelungsverarbeitung gültige Eingangspositionen zum Durchführen der ersten Unterverschachtelungsverarbeitung sind.

11. WLAN-Vorrichtung nach Anspruch 10, wobei der Prozessor (72, 82) ferner dazu konfiguriert ist, zu verschachtelnde Bits, die in mindestens einer gültigen Eingangsposition gesendet werden, zu modulieren, damit mindestens ein Modulationssignal erhalten wird, und zu verschachtelnde Bits, die in mindestens einer nicht gültigen Eingangsposition gesendet werden, zu modulieren, damit mindestens ein Modulationssignal erhalten wird, falls Bit 0 und/oder Bit 1 in anderen nicht gültigen Eingangspositionen der Verschachtelungsverarbeitung außer den gültigen Eingangspositionen gesendet wird bzw. werden, bis die Modulation von Datenbits, die in allen Ausgangspositionen der Verschachtelungsverarbeitung gesendet werden, beendet ist.

12. WLAN-Vorrichtung nach Anspruch 11, wobei der Prozessor (72, 82) ferner dazu konfiguriert ist, zu verschachtelnde Bits, die in mindestens einer gültigen Eingangsposition gesendet werden, zu modulieren, damit mindestens ein Modulationssignal erhalten wird, falls kein Datenbit in anderen nicht gültigen Eingangspositionen der Verschachtelungsverarbeitung außer den gültigen Eingangspositionen gesendet wird, bis die Modulation von Datenbits, die in allen Ausgangspositionen der Verschachtelungsverarbeitung gesendet werden, beendet ist.

13. WLAN-Vorrichtung nach Anspruch 11 oder 12, wobei der Prozessor (72, 82) dazu konfiguriert ist, die vorbestimmte Anzahl von Positionen von Datensubträgern mit einem höheren Rauschabstand und/oder einer höheren Kapazität als die Positionen des gültigen Datensubträgers zu bestimmen.

14. Vorrichtung eines drahtlosen lokalen Netzwerks bzw. WLAN-Vorrichtung, **dadurch gekennzeichnet, dass** sie Folgendes umfasst:
einen Verschachteler (71, 81), der dazu konfiguriert ist, eine Verschachtelungsverarbeitung an zu sendenden Datenbits durchzuführen;
einen Prozessor (72, 82), der dazu konfiguriert ist, eine vorbestimmte Anzahl von Kennungen gültiger Positionen aus einer beliebigen Unterverschachtelungsverarbeitung von mindestens zwei Unterverschachtelungsverarbeitungen, die in der durch den Verschachteler (71, 81) durchgeführten Verschachtelungsverarbeitung enthalten sind, zu erhalten, wobei die gültigen Positionen Eingangs-/Ausgangspositionen der beliebigen Unterverschachtelungsverarbeitung sind und zum Senden von zu sendenden Datenbits verwendet werden und die Anzahl der gültigen Positionen geringer als die Anzahl aller Eingangs-/Ausgangspositionen der beliebigen Unterverschachtelungsverarbeitung ist; gültige Eingangspositionen der Verschachtelungsverarbeitung gemäß den Kennungen der gültigen Positionen zu bestimmen; die zu sendenden Datenbits in den gültigen Eingangspositionen zu senden und Bit 0 und/oder Bit 1 oder kein Datenbit in anderen nicht gültigen Eingangspositionen der Verschachtelungsverarbeitung außer den gültigen Eingangspositionen zu senden; die Datenbits, die in Ausgangspositionen der Verschachtelungsverarbeitung gesendet werden, zu modulieren, damit Modulationssignale erhalten werden, und die Modulationssignale jeweils auf entsprechende Datensubträger abzubilden,
einen Speicher (83), der dazu konfiguriert ist, Kennungen der Eingangs-/Ausgangspositionen jeder durch den Verschachteler (71, 81) durchgeführten Unterverschachtelungsverarbeitung zu speichern;
wobei der Prozessor (72, 82) ferner dazu konfiguriert ist, eine vorbestimmte Anzahl von Positionen gültiger Datensubträger, die zum Senden der zu sendenden Datenbits gemäß einer vorbestimmten Regel verwendet werden, zu bestimmen; die Kennungen der gültigen Positionen vom Speicher (83) gemäß der vorbestimmten Anzahl von Positionen der bestimmten gültigen Datensubträger zu erhalten; die Modulationssignale Eins-zu-Eins zu den entsprechenden Datensubträgern der Reihe nach abzubilden, wobei die Datensubträger die gültigen Datensubträger umfassen.

## Revendications

1. Procédé de traitement d'entrelacement dans un système de réseau local sans fil, WLAN, **caractérisé en ce que** le procédé comprend les étapes suivantes :
obtenir (301, 402, 501), par un dispositif WLAN, un nombre prédéterminé d'identifiants de positions valides à partir d'un traitement de sous-entrelacement d'au moins deux traitements de sous-entrelacement contenus dans un traitement d'entrelacement, les positions valides étant des positions d'entrée/sortie dudit traitement de sous-entrelacement et étant utilisées pour transmettre des bits de données devant être transmis, et le nombre des positions valides étant inférieur au nombre de toutes les positions d'entrée/sortie dudit traitement de sous-entrelacement ;
déterminer (302, 403, 502) des positions d'entrée valides du traitement d'entrelacement selon les identifiants des positions valides ;
transmettre (303, 404, 503) les bits de données devant être transmis dans les positions d'entrée valides, et transmettre un bit 0 et/ou un bit 1 ou aucun bit de données dans des positions d'entrée non valides du traitement d'entrelacement autres que les positions d'entrée valides ;
moduler (304, 405, 504) des bits de données transmis dans des positions de sortie du traitement d'entrelacement pour obtenir des signaux de modulation et mapper les signaux de modulation aux sous-porteuses de données correspondantes respectivement, le procédé comprenant en outre :
déterminer un nombre prédéterminé de positions de sous-porteuses de données valides utilisées pour transmettre les bits de données devant être transmis selon une règle prédéterminée,
ladite étape consistant à obtenir un nombre prédéterminé d'identifiants de positions valides à partir d'un traitement de sous-entrelacement contenu dans le traitement d'entrelacement comprenant :
obtenir de façon aléatoire (501) le nombre prédéterminé des identifiants des positions valides à partir d'un traitement de sous-entrelacement contenu dans le traitement d'entrelacement selon le nombre prédéterminé de positions des sous-porteuses de données valides déterminées et déterminer des positions de sortie valides du traitement d'entrelacement selon les identifiants des positions valides ladite étape consistant à mapper les signaux de modulation aux sous-porteuses de données correspondantes respectivement comprenant :
mapper (504) les signaux de modulation correspondant aux bits de données présents dans les positions de sortie valides aux sous-porteuses de données correspondantes respectivement par l'intermédiaire d'un traitement de mappage des sous-porteuses de données.

2. Procédé selon la revendication 1, dans lequel ledit traitement d'entrelacement comprend au moins un temps de traitement de sous-entrelacement.

3. Procédé selon la revendication 2 dans lequel, si le traitement d'entrelacement comprend au moins deux temps de traitement de sous-entrelacement, une position de sortie pour exécuter un traitement de sous-entrelacement courant est une position d'entrée d'un traitement de sous-entrelacement suivant ; et/ou, une position de sortie pour exécuter un traitement de sous-entrelacement précédent est une position d'entrée d'un traitement de sous-entrelacement courant ;
une position de sortie du traitement d'entrelacement est une position de sortie pour exécuter le dernier traitement de sous-entrelacement ; une position d'entrée du traitement d'entrelacement est une position d'entrée pour exécuter le premier traitement de sous-entrelacement ; et les positions d'entrée valides du traitement d'entrelacement sont des positions d'entrée valides pour exécuter le premier traitement de sous-entrelacement.

4. Procédé selon la revendication 1, dans lequel si un bit 0 et/ou un bit 1 est transmis dans des positions d'entrée non valides du traitement d'entrelacement autres que les positions d'entrée valides, ladite étape consistant à moduler des bits de données transmis dans des positions de sortie du traitement d'entrelacement pour obtenir des signaux de modulation comprend :
moduler des bits devant être entrelacés transmis dans au moins une position d'entrée valide pour obtenir au moins un signal de modulation, et moduler des bits devant être entrelacés transmis dans au moins une position d'entrée non valide pour obtenir au moins un signal de modulation, jusqu'à ce que la modulation des bits de données transmis dans toutes les positions de sortie du traitement d'entrelacement soit terminée.

5. Procédé selon la revendication 4 dans lequel, si aucun bit de données n'est transmis dans des positions d'entrée non valides du traitement d'entrelacement autres que les positions d'entrée valides, ladite étape consistant à moduler des bits de données transmis dans des positions de sortie du traitement d'entrelacement pour obtenir des signaux de modulation comprend :
moduler des bits devant être entrelacés transmis dans au moins une position d'entrée valide, pour obtenir au moins un signal de modulation, jusqu'à ce que la modulation des bits de données transmis dans toutes les positions de sortie du traitement d'entrelacement soit terminée.

6. Procédé selon la revendication 4 ou 5, dans lequel ladite étape consistant à déterminer le nombre prédéterminé de positions des sous-porteuses de données valides utilisées pour transmettre les bits de données devant être transmis selon une règle prédéterminée comprend :
déterminer le nombre prédéterminé de positions de sous-porteuses de données avec un rapport signal/bruit supérieur et/ou une capacité plus élevée comme les positions des sous-porteuses de données valides.

7. Procédé de traitement d'entrelacement dans un système de réseau local sans fil, WLAN, **caractérisé en ce que** le procédé comprend :
obtenir (301, 402, 501), par un dispositif WLAN, un nombre prédéterminé d'identifiants de positions valides à partir d'un traitement de sous-entrelacement d'au moins deux traitements de sous-entrelacement contenus dans un traitement d'entrelacement, les positions valides étant des positions d'entrée/sortie dudit traitement de sous-entrelacement et étant utilisées pour transmettre des bits de données devant être transmis, et le nombre des positions valides étant inférieur au nombre de toutes les positions d'entrée/sortie dudit traitement de sous-entrelacement ;
déterminer (302, 403, 502) des positions d'entrée valides du traitement d'entrelacement selon les identifiants des positions valides ;
transmettre (303, 404, 503) les bits de données devant être transmis dans les positions d'entrée valides, et transmettre un bit 0 et/ou un bit 1 ou aucun bit de données dans des positions d'entrée non valides du traitement d'entrelacement autres que les positions d'entrée valides ;
moduler (304, 405, 504) des bits de données transmis dans des positions de sortie du traitement d'entrelacement pour obtenir des signaux de modulation et mapper les signaux de modulation aux sous-porteuses de données correspondantes respectivement, ladite étape consistant à obtenir un nombre prédéterminé d'identifiants de positions valides à partir d'un traitement de sous-entrelacement contenu dans un traitement d'entrelacement comprenant :
déterminer (401) un nombre prédéterminé de positions de sous-porteuses de données valides utilisées pour transmettre des bits de donnés devant être transmis selon une règle prédéterminée ;
obtenir (402) les identifiants des positions valides selon le nombre prédéterminé de positions des sous-porteuses de données valides déterminées,
ladite étape consistant à mapper les signaux de modulation aux sous-porteuses de données correspondantes respectivement comprenant :
mapper (405) les signaux de modulation un à un aux sous-porteuses de données correspondantes dans l'ordre, les sous-porteuses de données comportant les sous-porteuses de données valides.

8. Dispositif de réseau local sans fil, WLAN, **caractérisé en ce qu'**il comprend :
un entrelaceur (71, 81), configuré pour exécuter un traitement d'entrelacement sur des bits de données devant être transmis ;
un processeur (72, 82), configuré pour obtenir un nombre prédéterminé d'identifiants de positions valides à partir d'un traitement de sous-entrelacement d'au moins deux traitements de sous-entrelacement contenus dans le traitement d'entrelacement exécuté par l'entrelaceur (71, 81), les positions valides étant des positions d'entrée/sortie dudit traitement de sous-entrelacement et étant utilisées pour transmettre des bits de données devant être transmis, et le nombre des positions valides étant inférieur au nombre de toutes les positions d'entrée/sortie dudit traitement de sous-entrelacement ; déterminer des positions d'entrée valides du traitement d'entrelacement selon les identifiants des positions valides ; transmettre les bits de données devant être transmis dans les positions d'entrée valides et transmettre un bit 0 et/ou un bit 1 ou aucun bit de données dans des positions d'entrée non valides du traitement d'entrelacement autres que les positions d'entrée valides ; moduler les bits de données transmis dans des positions de sortie du traitement d'entrelacement pour obtenir des signaux de modulation et mapper les signaux de modulation aux sous-porteuses de données correspondantes respectivement,
le processeur (72, 82) étant en outre configuré pour déterminer un nombre prédéterminé de positions de sous-porteuses de données valides utilisées pour transmettre des bits de donnés devant être transmis selon une règle prédéterminée ; obtenir de façon aléatoire le nombre prédéterminé d'identifiants des positions valides à partir d'un quelconque traitement de sous-entrelacement contenu dans le traitement d'entrelacement selon le nombre prédéterminé de positions des sous-porteuses de données valides déterminées ; déterminer des positions de sortie valides du traitement d'entrelacement selon les identifiants des positions valides ; et mapper les signaux de modulation correspondant aux bits de données présents dans les positions de sortie valides aux sous-porteuses de données correspondantes respectivement par l'intermédiaire d'un traitement de mappage des sous-porteuses de données.

9. Dispositif WLAN selon la revendication 8, dans lequel le traitement d'entrelacement exécuté par l'entrelaceur (71, 81) sur les bits de données devant être transmis comprend au moins un temps de traitement de sous-entrelacement.

10. Dispositif WLAN selon la revendication 9 dans lequel, si le traitement d'entrelacement exécuté par l'entrelaceur (71, 81) sur les bits de données devant être transmis comprend au moins deux temps de traitement de sous-entrelacement, une position de sortie pour exécuter un traitement de sous-entrelacement courant est une position d'entrée d'un traitement de sous-entrelacement suivant ; et/ou, une position de sortie pour exécuter un traitement de sous-entrelacement précédent est une position d'entrée d'un traitement de sous-entrelacement courant ;
une position de sortie du traitement d'entrelacement est une position de sortie pour exécuter le dernier traitement de sous-entrelacement ; une position d'entrée du traitement d'entrelacement est une position d'entrée pour exécuter le premier traitement de sous-entrelacement ; et les positions d'entrée valides du traitement d'entrelacement sont des positions d'entrée valides pour exécuter le premier traitement de sous-entrelacement.

11. Dispositif WLAN selon la revendication 10, dans lequel le processeur (72, 82) est en outre configuré pour moduler des bits devant être entrelacés transmis dans au moins une position d'entrée valide pour obtenir au moins un signal de modulation et moduler des bits devant être entrelacés transmis dans au moins une position d'entrée non valide pour obtenir au moins un signal de modulation si un bit 0 et/ou un bit 1 est transmis dans des positions d'entrée non valides du traitement d'entrelacement autres que les positions d'entrée valides, jusqu'à ce que la modulation des bits de données transmis dans toutes les positions de sortie du traitement d'entrelacement soit terminée.

12. Dispositif WLAN selon la revendication 11, dans lequel le processeur (72, 82) est en outre configuré pour moduler des bits devant être entrelacés transmis dans au moins une position d'entrée valide pour obtenir au moins un signal de modulation si aucun bit de données n'est transmis dans des positions d'entrée non valides du traitement d'entrelacement autres que les positions d'entrée valides, jusqu'à ce que la modulation des bits de données transmis dans toutes les positions de sortie du traitement d'entrelacement soit terminée.

13. Dispositif WLAN selon la revendication 11 ou 12, dans lequel le processeur (72, 82) est configuré pour déterminer le nombre prédéterminé de positions de sous-porteuses de données avec un rapport signal/bruit supérieur et/ou une capacité plus élevée comme les positions des sous-porteuses de données valides.

14. Dispositif de réseau local sans fil, WLAN, **caractérisé en ce qu'**il comprend :
un entrelaceur (71, 81), configuré pour exécuter un traitement d'entrelacement sur des bits de données devant être transmis ;
un processeur (72, 82), configuré pour obtenir un nombre prédéterminé d'identifiants de positions valides à partir d'un traitement quelconque de sous-entrelacement d'au moins deux traitements de sous-entrelacement contenus dans le traitement d'entrelacement exécuté par l'entrelaceur (71, 81), les positions valides étant des positions d'entrée/sortie dudit quelconque traitement de sous-entrelacement et étant utilisées pour transmettre des bits de données devant être transmis, et le nombre des positions valides étant inférieur au nombre de toutes les positions d'entrée/sortie dudit traitement de sous-entrelacement ; déterminer des positions d'entrée valides du traitement d'entrelacement selon les identifiants des positions valides ; transmettre les bits de données devant être transmis dans les positions d'entrée valides et transmettre un bit 0 et/ou un bit 1 ou aucun bit de données dans des positions d'entrée non valides du traitement d'entrelacement autres que les positions d'entrée valides ; moduler les bits de données transmis dans des positions de sortie du traitement d'entrelacement pour obtenir des signaux de modulation et mapper les signaux de modulation aux sous-porteuses de données correspondantes respectivement,
une mémoire (83), configurée pour stocker des identifiants des positions d'entrée/sortie de chaque traitement de sous-entrelacement exécuté par l'entrelaceur (71, 81) ;
le processeur (72, 82), configuré en outre pour déterminer un nombre prédéterminé de positions de sous-porteuses de données valides utilisées pour transmettre les bits de données devant être transmis selon une règle prédéterminée ; obtenir les identifiants des positions valides à partir de la mémoire (83) selon le nombre prédéterminé de positions des sous-porteuses de données valides déterminées ; mapper les signaux de modulation un à un aux sous-porteuses de données correspondantes dans l'ordre, les sous-porteuses de données comportant les sous-porteuses de données valides.
